# EUROPÄISCHE PATENTSCHRIFT

(11) **EP 0 941 783 B1**
(45) Veröffentlichungstag und Bekanntmachung des Hinweises auf die Patenterteilung: **13.10.2004**
(21) Anmeldenummer: 98124089.8
(22) Anmeldetag: 18.12.1998
(51) Int. Cl.: B21D 53/90, B60B 35/08, B21K 1/06

(54) **Verfahren zur Herstellung eines einteiligen Achskörpers**
Method of manufacturing an one-piece axle body
Procédé de fabrication d'un corps d'essieu monobloc

(30) Priorität: 09.03.1998 DE 19809991; 25.04.1998 DE 19818653
(43) Veröffentlichungstag der Anmeldung: 15.09.1999
(73) Patentinhaber: BPW Bergische Achsen Kommanditgesellschaft, 51674 Wiehl (DE)
(72) Erfinder: Klever, Manfred, 54634 Bitburg (DE)
(74) Vertreter: Christophersen, Ruth

(56) Entgegenhaltungen:
- FR-A- 2 579 490
- US-A- 4 208 900
- PATENT ABSTRACTS OF JAPAN vol. 9, no. 158 (M-393), 3. Juli 1985 & JP 60 033847 A (SHIN NIPPON SEITETSU KK), 21. Februar 1985

## Beschreibung

Die Erfindung betrifft ein Verfahren zur Herstellung eines einteiligen Achskörpers aus einem Achsrohr, vorzugsweise eines durchgehenden Achskörpers für eine Fahrzeuganhänger-Achse.

Für die Verwendung bei Fahrzeuganhänger-Achsen sind bereits durchgehende Achskörper bekannt, die drei- oder vierteilig aufgebaut sind und sich aus einem hohlen Achsrohr sowie zwei an den Enden des Achsrohres durch Stumpfschweißungen angesetzten Achsschenkeln zusammensetzen. Das Achsrohr kann einteilig geformt sein oder sich seinerseits aus zwei offenen Profilen zusammensetzen, die unter Ziehung zweier Schweißnähte gegeneinandergesetzt sind. Zur Herstellung des vorgenannten Achskörpers sind daher eine Vielzahl einzelner Fertigungsschritte erforderlich, was zu hohen Produktionskosten führt.

Bekannt ist ferner ein einteilig ausgebildeter Achskörper, bei dem zur Herstellung der Achsschenkel die Enden des verlängerten Achsrohres erwärmt und dann in einem Schmiedeverfahren einer Durchmesserreduzierung unterzogen werden bis die gewünschten Durchmesser der beiden Achsschenkel erreicht sind. Die auf diese Weise hergestellten einteiligen Achskörper erlauben aber nur ein bestimmtes Verhältnis zwischen dem Gesamtquerschnitt des Achsrohres und dem Durchmesser im Bereich des durch Schmiedung reduzierten Achsschenkels. Der Grund hierfür liegt in dem Erfordernis, daß zur Sicherung der Tragfähigkeit des Achsschenkels dieser möglichst massiv geformt sein sollte. Um dies sicherzustellen, muß eine entsprechende Materialmenge zur Verfügung stehen. Hierzu muß das als Ausgangsprodukt dienende Achsrohr eine entsprechend große Wanddicke aufweisen, wobei diese Wanddicke jedoch wiederum größer ausfällt, als dies für die Sicherstellung der Tragfähigkeit des Achskörpers eigentlich erforderlich wäre. Die nach dem bekannten Verfahren hergestellten, einteiligen Achskörper weisen daher ein höheres Gewicht auf, als im Hinblick auf die Belastungssituation erforderlich.

Bei der einteiligen Verarbeitung von Vierkantrohren mit geringer Wandstärke tritt als nachteilig hinzu, daß beim Reduzieren solcher Vierkantrohre infolge der über den Querschnitt unterschiedlichen und bei dünnwandigen Rohren geringen Widerstandsmomente ein Verdrillen auftritt und somit Fältelungen entstehen, die unerwünschte Kerbwirkungen verursachen.

Aus Patent Abstracts of Japan vol. 9, no. 158 (M-393) zu JP 60 033847 A ist ebenfalls bereits ein Verfahren zur Herstellung eines Achskörpers bekannt, bei dem zur Formung des Achsschenkels die Enden des Achsrohres erwärmt, und dann in einem Schmiedeverfahren einer Reduzierung des Durchmessers unterzogen werden, bis der gewünschte Durchmesser des Achsschenkels erreicht ist. Das Ende des Achsrohres wird hierzu erhitzt und anschließend gestaucht, wodurch sich der Durchmesser im Bereich des zu formenden Achsschenkels verringert. In einem weiteren Schritt erfolgt dann ein im Wesentlichen radiales Schmieden, um so einen im äußeren Achsschenkelbereich nahezu massiven Achskörper zu erhalten. Hierbei bestehen die oben bereits erwähnten Grenzen in Bezug auf das Verhältnis zwischen dem Gesamtquerschnitt des Achsrohres und dem Durchmesser im Bereich des durch Schmiedung reduzierten Endes des Achsschenkels. Damit die Enden des Achsschenkels nahezu massiv gestaltet werden können, muß. das als Ausgangsprodukt dienende Achsrohr eine entsprechend große Wanddicke aufweisen. Diese Wanddicke fällt dann jedoch größer aus, als dies für die Sicherstellung der Tragfähigkeit des Achskörpers eigentlich erforderlich wäre. Daher weist auch der nach der Japanischen Druckschrift hergestellte, einteilige Achskörper ein höheres Gewicht auf, als im Hinblick auf die Belastungssituation erforderlich wäre.

Die Herstellung eines einteiligen Achskörpers durch radiale Querschnittsverringerung im Bereich des Achsschenkels ist ferner aus der FR 2 579 490 A und der US 4,208,900 bekannt. In beiden Fällen führt die radiale Druckeinwirkung im Bereich des zu formenden Achsschenkels zwar zu der gewünschten Durchmesserreduzierung, jedoch ist die hierfür zur Verfügung stehende Materialmenge relativ gering. Die nach dem Abschluss des radialen Schmiedeprozesses verbleibende Durchgangsöffnung ist von relativ großem Querschnitt, was für die Tragfähigkeit des Achsschenkels nachteilig ist.

Der Erfindung liegt die **Aufgabe** zugrunde, ein Verfahren zu schaffen, mit dem sich ein einteiliger Achskörper herstellen läßt, bei dem das Gewicht des Achskörpers und dessen Festigkeit optimal aufeinander abgestimmt sind.

Zur Lösung dieser Aufgabe wird ein Verfahren zur Herstellung eines einteiligen Achskörpers aus einem Achsrohr vorgeschlagen, mit den in den Patentansprüchen 1 und 2 angegebenen Merkmalen.

Erfindungsgemäß wird das Achsrohr zunächst einer partiellen Stauchung unterzogen, wobei zur Aufnahme der sich hierbei einstellenden axialen Druckkräfte eine entsprechende Werkstückaufnahme vorgesehen ist. Durch das Stauchen wird in dem entsprechenden Bereich des Achsrohres die Wanddicke mit der Folge einer Materialanhäufung erhöht. Dieses zusätzliche Material steht während des anschließenden radialen Schmiedens zur Verfügung, um genügend Material für einen massiven oder zumindest nahezu massiven Achsschenkel zur Verfügung zu haben. Der Querschnitt des Achsrohres wird vor, zugleich mit oder nach dem Stauchvorgang von seinem ursprünglichen Querschnitt auf einen größeren Kreisquerschnitt umgeformt, wobei bei dem radialen Schmieden dieser Kreisquerschnitt auf den geringeren Kreisquerschnitt des Achsschenkels reduziert wird.

Durch die Erfindung läßt sich also ein relativ dünnwandiges Achsrohr einsetzen, um durch anschließendes Umformen gleichwohl einen ausreichend festen Achsschenkel zu erzielen. Der so hergestellte Achskörper bietet daher ein Optimum an Festigkeit bei relativ geringem Gewicht. Diese Optimierung läßt sich insbesondere dann erzielen, wenn das Verhältnis von Wanddicke zu Außendurchmesser bzw. Seitenlänge des Achsrohres kleiner als 1:10 ist. Infolge des Rundformens und des gezielten Stauchens vor dem Reduzieren des Achsrohres werden während des Verformens einerseits ausreichende Widerstandsmomente gegen Verdrillung erreicht, und zum anderen liegt ein diesbezüglich besonders günstiger und homogener Kreisquerschnitt vor, wodurch sich die Gefahr von Fältelungen während des radialen Schmiedens verringert. Als Achsrohr kann ein quadratisches, durch Längsbiegung oder nahtlos hergestelltes Vierkantrohr verwendet werden. Schließlich läßt sich das erfindungsgemäße Verfahren dadurch weiterentwickeln, daß die Umformung des herzustellenden Achsschenkels zumindest in zwei in Längsrichtung des Achsrohres hintereinanderliegenden Zonen erfolgt, von denen die weiter innen liegende Zone maximal gestaucht wird, wohingegen die weiter außen liegende Zone eine im Vergleich geringere oder keine Stauchung erfährt. Auf diese Weise lassen sich unter bestmöglicher Materialausnutzung auch solche Achsschenkel herstellen, die zu den Enden hin in etwa kegelförmig zulaufen und daher an den Enden weniger Material benötigen, als der in der Nähe des hohlen Teils des Achskörpers.

Mit der Erfindung vorgeschlagen wird schließlich ein nach einem der vorgenannten Verfahren hergestellter Achskörper.

Nachfolgend wird anhand der zugehörigen Zeichnungen ein Ausführungsbeispiel der Erfindung erläutert. Auf der Zeichnung zeigen:
- Fig. 1: in einer Schnittdarstellung einen fertigen Achskörper mit an dessen Enden angeformten massiven Achsschenkeln,
- Fig. 2: verschiedene Stufen der Umformung eines Achsrohres mit durchgehendem quadratischen Querschnitt zu einem Achskörper,
- Fig. 3: Einzeldarstellungen der in Fig. 2 mit "III" bezeichneten Schnitte, jedoch ohne Werkstückaufnahme und Stauchwerkzeug,
- Fig. 4: Einzeldarstellungen der in Fig. 2 mit "IV" bezeichneten Schnitte, jedoch ohne Werkstückaufnahme und Stauchwerkzeug, und
- Fig. 5: Einzeldarstellungen der in Fig. 2 mit "V" bezeichneten Schnitte, jedoch ohne Werkstückaufnahme und Stauchwerkzeug.

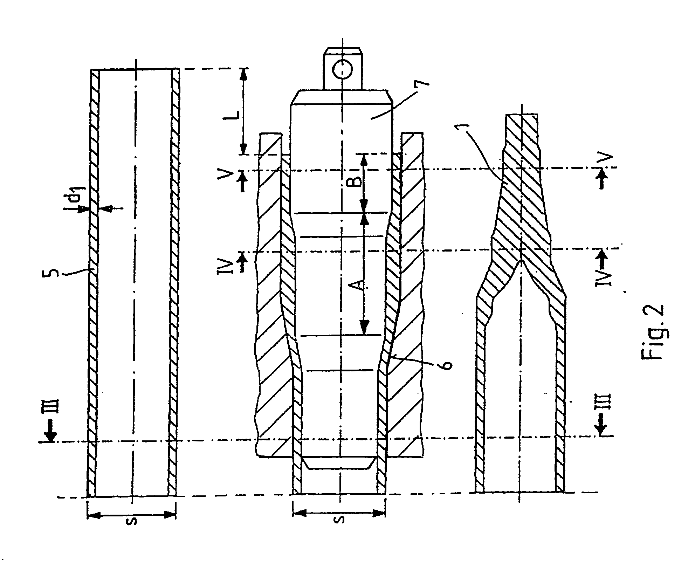

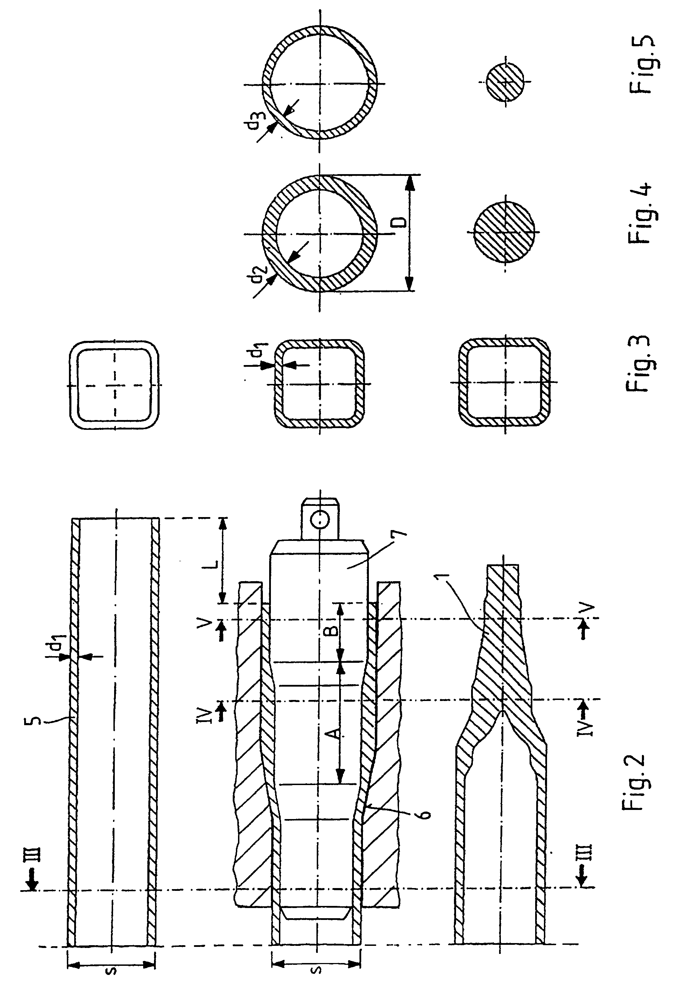

Der in Fig. 1 dargestellte Achskörper besteht aus einem langgestreckten, im Querschnitt im wesentlichen quadratischen und hohlen Bereich I mit jeweils in den Endbereichen II angeformten Achsschenkeln 1. An den Achsschenkeln 1 sind in an sich bekannter Weise zylindrische Flächen 2, 3 ausgebildet, auf die sich später die Radlager der Fahrzeugachse aufsetzen lassen. Die Enden werden in ebenfalls an sich bekannter Weise mit Gewindeflächen 4 für die zentralen Radmuttern versehen. Der gesamte Achskörper ist aus einem einzigen Stück durch Umformen und Schmieden hergestellt, wobei die hierzu im einzelnen verwendeten Verfahrensschritte nachfolgend anhand der Fig. 2 bis 5 erläutert werden.

Ausgangspunkt ist das in Fig. 2 oben dargestellte, überlange und dünnwandige Achsrohr 5. Dieses weist, wie in Fig. 3 im oberen Teil erkennen läßt, einen quadratischen Querschnitt mit abgerundeten Längskanten auf. Die Wanddicke beträgt d₁, die Seitenlänge des Vierkantrohres beträgt s.

Das Achsrohr 5 nach Fig. 1 wird in eine Werkstückaufnahme eingespannt, die axiale Druckkräfte und insbesondere Stauchkräfte auf das Achsrohr 5 aufnehmen kann. Von der Werkstückaufnahme sind im mittleren Teil der Fig. 2 die Backenflächen 6 eingezeichnet.

Die Stauchkraft wird vom freien Rohrende aus axial in das Achsrohr 5 eingeleitet, wozu ein Stauchwerkzeug 7 in das Ende des Achsrohres 5 eingepreßt wird. Hierbei vergrößert sich der Durchmesser des Achsrohres, ferner erhöht sich die Wanddicke von d₁ auf d₂. Im Vergleich der Fig. 3 bis 5 ist ferner zu erkennen, daß während und infolge des Stauchprozesses der ursprünglich quadratische Querschnitt des Achsrohres in einen demgegenüber vergrößerten kreisrunden Querschnitt mit Außendurchmesser D umgeformt wird.

Im mittleren Teil der Fig. 2 ist ferner dargestellt, daß die Umformung des herzustellenden Achsschenkels in mindestens zwei in Längsrichtung des Achsrohres hintereinander liegenden Zonen A und B erfolgt. Die weiter innen liegende Zone A wird maximal gestaucht, so daß sich hier die Wanddicke d₂ einstellt, wohingegen die weiter außen liegende Zone B eine im Vergleich geringere oder keine Stauchung erfährt. Die Wanddicke beträgt hier nur d3. Sowohl in Zone A als auch in Zone B verformt sich das Material jedoch in die Gestalt des in Fig. 4 und 5 dargestellten, vergrößerten Kreisquerschnittes, wohingegen die übrige Länge des Achsrohres 5 ihren ursprünglichen, beim Ausführungsbeispiel quadratischen Querschnitt beibehält.

In einem weiteren, unten in Fig. 2 dargestellten Verfahrensschritt erfolgt ein Schmieden des zuvor gestauchten Bereiches des Achsrohres und hierbei eine allseitige Reduzierung des nunmehr runden Rohrkörpers bis auf den gewünschten Durchmesser des Achsschenkels 1. Da in der Zone A durch die dort stärkere Stauchung mehr Material zur Verfügung steht, als in der im Vergleich dünnwandrigeren Zone B, läßt sich der im wesentlichen kegelförmig zulaufende Achsschenkel 1 mit massivem oder nahezu massivem Querschnitt erzeugen, so daß der Achsschenkel 1 sehr hohe Widerstandsmomente aufnehmen kann, obgleich das Ausgangsmaterial, d. h., das Vierkantrohr des Achskörpers, relativ dünnwandig gestaltet ist. Bei dem Ausgangsmaterial beträgt das Verhältnis von Wanddicke d₁ zur Seitenlänge s weniger als 1:10.

Das Umformen des Achsrohres durch Stauchen und Schmieden des umzuformenden Achsrohrbereiches erfolgt vorzugsweise bei einer Temperatur zwischen 1.100°C und 1.200°C.

### Bezugszeichentliste

- 1: Achsschenkel
- 2: Fläche
- 3: Fläche
- 4: Gewindefläche
- 5: Achsrohr
- 6: Backenflächen der Werkstückaufnahme
- 7: Stauchwerkzeug
- I: Bereich
- II: Bereich
- A: innere Zone
- B: äußere Zone
- L: Längenreduzierung des Achsrohres beim Stauchen
- d₁: Wanddicke
- d₂: Wanddicke
- d₃: Wanddicke
- D: Außendurchmesser im gestauchten Bereich
- s: Seitenlänge

## Patentansprüche

1. Verfahren zur Herstellung eines einteiligen Achskörpers aus einem Achsrohr, vorzugsweise eines durchgehenden Achskörpers für eine Fahrzeuganhängerachse, bei dem der ursprüngliche Querschnitt des Achsrohrs (5) im Bereich des herzustellenden Achsschenkels(1) durch mechanisches Umformen auf den Durchmesser des Achsschenkels reduziert wird, mit den Schritten
a) Einspannen des Achsrohres (5) in eine zumindest axiale Druckkräfte aufnehmende Werkstückaufnahme,
b) durch axiale Druckeinwirkung Stauchen des Achsrohres (5) im Bereich des herzustellenden Achsschenkels (1), hierbei Erhöhung der Wanddicke (d₂) im gestauchten Bereich im Vergleich zur übrigen Wanddicke (d₁) des Achsrohres,
c) zugleich mit oder im Anschluß an den Stauchvorgang Umformen des Achsrohres (5) im Bereich des herzustellenden Achsschenkels (1) auf einen Kreisquerschnitt, der größer ist als der ursprüngliche Querschnitt des Achsrohres,
d) radiales Schmieden des gestauchten Bereiches, hierbei Reduzierung des Kreisquerschnittes bis auf den gewünschten Durchmesser des Achsschenkels.

2. Verfahren zur Herstellung eines einteiligen Achskörpers aus einem Achsrohr, vorzugsweise eines durchgehenden Achskörpers für eine Fahrzeuganhängerachse, bei dem der ursprüngliche Querschnitt des Achsrohres (5) im Bereich des herzustellenden Achsschenkels (1) durch mechanisches Umformen auf den Durchmesser des Achsschenkels reduziert wird, mit den Schritten
a) Einspannen des Achsrohres (5) in eine zumindest axiale Druckkräfte aufnehmende Werkstückaufnahme,
b) Umformen des Achsrohres (5) im Bereich des herzustellenden Achsschenkels (1) auf einen Kreisquerschnitt, der größer ist als der ursprüngliche Querschnitt des Achsrohres,
c) durch axiale Druckeinwirkung Stauchen des Achsrohres (5) im Bereich des herzustellenden Achsschenkels (1), hierbei Erhöhung der Wanddicke (d₂) im gestauchten Bereich im Vergleich zur übrigen Wanddicke (d₁) des Achsrohres,
d) radiales Schmieden des gestauchten Bereiches, hierbei Reduzierung des Kreisquerschnittes bis auf den gewünschten Durchmesser des Achsschenkels.

3. Verfahren nach Anspruch 1 oder Anspruch 2, **dadurch gekennzeichnet, daß** das Verhältnis von Wanddicke (d₁) zu Außendurchmesser bzw. Seitenlänge (s) des Achsrohres kleiner als 1:10 ist.

4. Verfahren nach einem der Ansprüche 1 bis 3, **gekennzeichnet durch** Verwendung eines **im Querschnitt** quadratischen, **durch** Längsbiegung oder nahtlos hergestellten Vierkantrohres als Achsrohr (5).

5. Verfahren nach einem der vorangehenden Ansprüche, **dadurch gekennzeichnet, daß** die Umformung des herzustellenden Achsschenkels (1) in mindestens zwei in Längsrichtung des Achsrohres hintereinanderliegenden Zonen (A, B) erfolgt, von denen die weiter innen liegende Zone (A) maximal gestaucht wird, wohingegen die weiter außen liegende Zone (B) eine im Vergleich geringere oder keine Stauchung erfährt.

6. Verfahren nach einem der vorangehenden Ansprüche, **dadurch gekennzeichnet, daß** das Stauchen und anschließende radiale Schmieden bei einer Temperatur des Achsrohres zwischen 1.100 °C und 1.200°C erfolgt.

7. Verfahren nach einem der vorangehenden Ansprüche, **dadurch gekennzeichnet, daß** das Achsrohr (5) ausschließlich im Bereich des Achsschenkels(1) teilvergütet wird.

## Claims

1. Method of manufacturing a one-piece axle body from an axle tube, preferably a continuous axle body for a vehicle trailer axle, in which the original cross section of the axle tube (5) is reduced, in the region of the axle stub (1) that is to be produced, to the diameter of the axle stub by mechanical deformation, comprising the steps
a) clamping the axle tube (5) into a workpiece holder that absorbs at least axial pressure forces,
b) by the action of axial pressure, compressing the axle tube (5) in the region of the axle stub (1) that is to be produced, thereby increasing the wall thickness (d₂) in the compressed region compared to the rest of the wall thickness (d₁) of the axle tube,
c) at the same time as or following the compression operation, shaping the axle tube (5), in the region of the axle stub (1) that is to be produced, to form a circular cross section which is greater than the original cross section of the axle tube,
d) radially forging the compressed region, thereby reducing the circular cross section to the desired diameter of the axle stub.

2. Method of manufacturing a one-piece axle body from an axle tube, preferably a continuous axle body for a vehicle trailer axle, in which the original cross section of the axle tube (5) is reduced, in the region of the axle stub (1) that is to be produced, to the diameter of the axle stub by mechanical deformation, comprising the steps
a) clamping the axle tube (5) into a workpiece holder that absorbs at least axial pressure forces,
b) shaping the axle tube (5), in the region of the axle stub (1) that is to be produced, to form a circular cross section which is greater than the original cross section of the axle tube,
c) by the action of axial pressure, compressing the axle tube (5) in the region of the axle stub (1) that is to be produced, thereby increasing the wall thickness (d₂) in the compressed region compared to the rest of the wall thickness (d₁) of the axle tube,
d) radially forging the compressed region, thereby reducing the circular cross section to the desired diameter of the axle stub.

3. Method according to Claim 1 or Claim 2, **characterized in that** the ratio of wall thickness (d₁) to outer diameter or side length (s) of the axle tube is less than 1:10.

4. Method according to any of Claims 1 to 3, **characterized by** using as axle tube (5) a four-sided tube which is square in cross section and is produced by longitudinal bending or seamlessly.

5. Method according to any of the preceding claims, **characterized in that** the shaping of the axle stub (1) that is to be produced takes place in at least two zones (A, B) which lie behind one another in the longitudinal direction of the axle tube, of which the innermost zone (A) is compressed to a maximum whereas the outermost zone (B) undergoes comparatively less compression or no compression.

6. Method according to any of the preceding claims, **characterized in that** the compression and subsequent radial forging are carried out at a temperature of the axle tube of between 1100°C and 1200°C.

7. Method according to any of the preceding claims, **characterized in that** the axle tube (5) is partially heat-treated in the region of the axle stub (1).

## Revendications

1. Procédé de fabrication d'un corps d'essieu monobloc à partir d'un tube d'essieu, de préférence d'un corps d'essieu ininterrompu pour l'essieu d'une remorque de véhicule, pour lequel la section d'origine du tube d'essieu (5) est réduite par formage mécanique, dans la partie de la fusée d'essieu (1) à fabriquer, au diamètre de la fusée, avec les étapes :
a) serrage du tube d'essieu (5) dans un logement de pièce ouvrée supportant au moins des forces de pression axiales,
b) par effet de pression axiale, refoulement du tube d'essieu (5) dans la partie de la fusée d'essieu (1) à fabriquer, ce faisant, augmentation de l'épaisseur de paroi (d₂) dans la partie refoulée en comparaison de l'épaisseur de paroi (d₁) du reste du tube d'essieu,
c) en même temps que le processus de refoulement ou à la suite de ce dernier, formage du tube d'essieu (5) dans la partie de la fusée d'essieu (1) à fabriquer jusqu'à une section circulaire qui est plus grande que la section d'origine du tube d'essieu,
d) forgeage radial de la partie refoulée, ce faisant, réduction de la section circulaire jusqu'au diamètre désiré de la fusée.

2. Procédé de fabrication d'un corps d'essieu monobloc à partir d'un tube d'essieu, de préférence d'un corps d'essieu ininterrompu pour l'essieu d'une remorque de véhicule, pour lequel la section d'origine du tube d'essieu (5) est réduite par formage mécanique, dans la partie de la fusée d'essieu (1) à fabriquer, au diamètre de la fusée, avec les étapes:
a) serrage du tube d'essieu (5) dans un logement de pièce ouvrée supportant au moins des forces de pression axiales,
b) formage du tube d'essieu (5) dans la partie de la fusée d'essieu (1) à fabriquer à une section circulaire qui est plus grande que la section initiale du tube d'essieu,
c) par effet de pression axiale, refoulement du tube d'essieu (5) dans la partie de la fusée d'essieu (1) à fabriquer, ce faisant, augmentation de l'épaisseur de paroi (d₂) dans la partie refoulée en comparaison de l'épaisseur de paroi (d₁) du reste du tube d'essieu,
d) forgeage radial de la partie refoulée, ce faisant, réduction de la section circulaire jusqu'au diamètre désiré de la fusée.

3. Procédé selon la revendication 1 ou la revendication 2, **caractérisé en ce que** le rapport de l'épaisseur de paroi (d₁) au diamètre extérieur, respectivement à la longueur du côté (s) du tube d'essieu est plus petit que 1 : 10.

4. Procédé selon l'une quelconque des revendications 1 à 3, **caractérisé par** l'utilisation, en tant que tube d'essieu (5), d'un tube de section carrée, fabriqué par pliage longitudinal ou sans soudure.

5. Procédé selon l'une quelconque des revendications précédentes, **caractérisé en ce que** le formage de la fusée (1) à fabriquer s'effectue dans au moins deux zones (A, B) se trouvant l'une derrière l'autre dans la direction de la longueur du tube d'essieu, dont la zone (A) se trouvant le plus à l'intérieur est refoulée au maximum, tandis que la zone (B) se trouvant plus à l'extérieur subit un refoulement en comparaison plus petit, ou n'en subit aucun.

6. Procédé selon l'une quelconque des revendications précédentes, **caractérisé en ce que** le refoulement et le forgeage radial qui suit s'effectuent à une température du tube d'essieu entre 1.100°C et 1.200°C.

7. Procédé selon l'une quelconque des revendications précédentes, **caractérisé en ce que** le tube d'essieu (5) n'est partiellement trempé et revenu que dans la partie de la fusée d'essieu (1).
